# EUROPÄISCHE PATENTANMELDUNG

(11) **EP 4 169 651 A1**
(43) Veröffentlichungstag der Anmeldung: **26.04.2023**
(21) Anmeldenummer: 22203447.2
(22) Anmeldetag: 25.10.2022
(51) Int. Cl.: B23K 26/00, B23K 26/70, B23K 37/00

(54) **SYSTEM ZUM BEARBEITEN VON WERKSTÜCKEN MIT EINEM LASERKOPF**

(30) Priorität: 25.10.2021 DE 102021127645
(71) Anmelder: LeGuin, André, 88279 Amtzell (DE)
(72) Erfinder: LeGuin, André, 88279 Amtzell (DE)
(74) Vertreter: Patentanwälte und Rechtsanwalt Weiß, Arat & Partner mbB

(57) **Zusammenfassung**

Bei einem System zum Bearbeiten von Werkstücken mit einem Laserkopf (P) zum Ausbringen eines Laserstrahls (5), der in einem Gehäuse (1) in einem Lichtleiter (3) geführt ist, wobei der Lichtleiter (3) mit einer Lichtquelle verbunden ist und diese Verbindung durch einen Unterbrecher (13) abschaltbar ist, soll dem Unterbrecher (13) ein elektrischer Schaltkreis zugeordnet sein, der bei einer Lageänderung des Gehäuses (1) den Unterbrecher (13) betätigt.

## Beschreibung

### Technisches Gebiet

Die Erfindung betrifft ein System zum Bearbeiten von Werkstücken mit einem Laserkopf zum Ausbringen eines Laserstrahls, der in einem Gehäuse in einem Lichtleiter geführt ist, wobei der Lichtleiter mit einer Lichtquelle verbunden ist und diese Verbindung durch einen Unterbrecher abschaltbar ist.

### Stand der Technik

In vielen Bereichen der industriellen Tätigkeit müssen Werkstücke mittels Werkzeug bearbeitet werden. Die vorliegende Erfindung bezieht sich vor allem auf die Bearbeitung durch Laserschweissen, wobei in der Regel ein von einem Laser erzeugter Laserstrahl durch eine Optik auf einen Punkt des Werkstücks gerichtet wird und die erforderliche Wärme zum Aufschmelzen des Werkstücks in diesem Bereich aufbringt. Das Bearbeiten kann ein Trennen oder Fügen, ein Stanzen oder Lochen oder ein beliebiges bekanntes Bearbeiten eines Werkstücks sein.

Durch das Aufbringen von Wärme auf das Werkstück stellt aber ein derartiger Laserkopf auch ein Sicherheitsproblem dar, da ein unkontrollierter Laserstrahl eine Gefahr für Mensch und Umwelt sein kann. Aus diesem Grunde muss ein derartiger Laserkopf bzw. ein System, in welchem ein Laserkopf verwendet wird, sehr genau beobachtet und kontrolliert werden. So zeigt beispielsweise die DE 20 2008 007 299 U1 eine Sicherheitseinrichtung für manuelle Laserbearbeitungsvorrichtungen. Diese besitzen einen optischen, einen Lichtsender aufweisenden Detektor zur Detektion der Anwesenheit eines Körperteils einer Bedienperson in einer vorgegebenen Überwachungszone. Mit dem Detektor ist eine Schalteinheit zum detektorsignal-abhängigen Ein- bzw. Ausschalten wenigstens einer Komponente einer zugeordneten Laserbearbeitungsvorrichtung verbunden.

Des weiteren zeigt die EP 3 822 689 A1 einen Strahlverschluss, wobei beim Öffnen eines Sicherheitskreises, beispielsweise bei Unterbrechen einer Lichtschranke oder Öffnen einer Einhausung, eine reflektierende Optik in den Strahlengang des Laserstrahls eingeklappt wird. Die reflektierende Optik unterbricht dann den Weg des Laserstrahls zu einer Austrittsöffnung. Der Laserstrahl wird von der reflektierenden Optik abgelenkt und trifft typischerweise auf einen Absorber. Derartige Laserverschlüsse sind auch aus der DE 10 2004 008 326 A1 oder der DE 10 2016 101 231 B4 bekannt.

In vielen Anwendungsbereichen ist es aber vorgesehen, dass eine Mehrzahl von Laserköpfen in einem Anlageverbund miteinander betrieben werden. Wird dann ein Laserkopf ausgeschaltet, wird dieser Anlageverbund unterbrochen und alle anderen Laserköpfe stillgelegt.

### Aufgabe der Erfindung

Aufgabe der vorliegenden Erfindung ist es, ein gesamtes Sicherheitskonzept für die Handhabung von Laserköpfen zu entwickeln, welches einfach und zuverlässig arbeitet.

### Lösung der Aufgabe

Zur Lösung der Aufgabe führt zum einen, dass dem Unterbrecher ein elektrischer Schaltkreis zugeordnet ist, der bei einer Lageänderung des Gehäuses den Unterbrecher betätigt.

Diese einfache Ausgestaltung gewährleistet, dass der Laserkopf, sobald er aus seiner Arbeitsposition entfernt wird, auch abgeschaltet wird. Dies geschieht bevorzugt natürlich dadurch, dass der elektrische Schaltkreis unterbrochen wird, da nur so auch einem rauen Umfeld um eine Bearbeitungsmaschine Rechnung getragen werden kann. Eine Überwachung, beispielsweise durch eine sich bewegende Quecksilberkugel, dürfte diesem rauen Umfeld nicht gerecht werden. Bevorzugt wird deshalb eine einfache mechanische Möglichkeit zur Unterbrechung des Schaltkreises. Zu diesem Zweck sind in dem Gehäuse des Laserkopfs elektrische Kontakte integriert, welche unterbrochen werden können. Dies könnte natürlich manuell erfolgen, bevorzugt wird aber ein Unterbrechen der elektrischen Kontakte bei Bewegung des Laserkopfs, insbesondere bei seiner Entnahme aus einer Halterung, in der er in seiner Arbeitsstellung aufgenommen ist. Beispielsweise kann diese Halterung schalenförmig ausgestaltet sein, so dass der Laserkopf in diese Schale eingeclipst wird.

In einem einfachen Ausführungsbeispiel sind die elektrischen Kontakte als Ringe ausgebildet, die in dem Gehäusemantel integriert sind. Natürlich könnten sie auch auf dem Gehäusemantel aufgesetzt sein. Die Ringe brauchen auch nicht kreisrund zu sein, es genügt, wenn sie eine ausreichende Kontaktmöglichkeit ausbilden, auch wenn der Laserkopf in der Halterung gedreht wird.

Ausserhalb der Arbeitslage besitzen diese Ringe keinen Kontakt miteinander. Der Kontakt soll erst dann hergestellt werden, wenn der Laserkopf in Arbeitsstellung gebracht wird, d.h., wenn er in die Halterung eingesetzt wird. In diesem Fall können beispielsweise in der Halterung Ringsegmente vorgesehen werden, die miteinander verbunden sind. Wird der Laserkopf mit den Ringen in die Halterung eingesetzt, so gelangen die Ringe an oder in dem Gehäuse des Laserkopfs in Kontakt mit den Ringsegmenten, so dass auch hier die Ringe elektrisch miteinander verbunden werden. Damit ist der Schaltkreis geschlossen und der Maschinensteuerung wird mitgeteilt, dass sich der Laserkopf in Arbeitslage befindet. Wird der Laserkopf aus der Halterung entfernt, besitzen die Ringe in oder am Gehäusemantel keinen Kontakt mehr, sondern sind beabstandet, was für die Maschinensteuerung bedeutet, dass der Laserkopf automatisch abgeschaltet wird.

Zur besseren Isolierung bzw. Beabstandung der Ringe voneinander an dem Gehäusemantel des Laserkopfs kann vorgesehen sein, dass sich zwischen den Ringen ein Ringkragen befindet. Diesem Ringkragen kann zwischen den Ringsegmenten in der Halterung eine Rinne zugeordnet sein, so dass der Laserkopf auf diese Weise seine feste und definierte Lage in der Halterung findet, in der er dann zwar noch gedreht aber nicht mehr verschoben werden kann.

Um die Sicherheitsabschaltung des Laserkopfs ausserhalb der Arbeitslage noch zu verbessern, ist eine Einrichtung vorgesehen, die erkennt, ob tatsächlich die Überbrückung des Schaltkreises im Bereich der Ringe durch die Ringsegmente und nicht durch einen fremden Gegenstand erfolgt. Beispielsweise könnte mutwillig eine Überbrückung der Ringe durch einen beliebigen leitenden Gegenstand, wie beispielsweise einen Metalldraht, erfolgen, oder aber der Laserkopf könnte in einem Haufen von Metallspänen abgelegt werden, so dass hier eine Überbrückung stattfindet und der Laserkopf trotz Entnahme aus seiner Halterung in Funktion bleibt und die Laserstrahlung nicht abgeschaltet ist. Um dies zu verhindern, ist erfindungsgemäss vorgesehen, dem elektrischen Schaltkreis einen Widerstand einer vorbestimmten Grösse zuzuordnen. Der Widerstand sitzt in einem Isolator mit zwei Kontakten zur Signalübergabe. Beispielsweise kann er 1,5 kOhm betragen. Erkennt eine Kontrolleinheit oder die Maschinensteuerung einen Widerstand von beispielsweise 3 kOhm, so weiss die Maschinensteuerung, dass der Laserkopf nicht in der gewünschten Halterung überbrückt wird und lässt den Laserkopf ausgeschaltet.

Ein weiterer Grundgedanke der vorliegenden Erfindung ist eine Parkbox, die einer Mehrzahl von Laserköpfen zugeordnet wird. Diese Parkbox dient der Aufnahme von Laserköpfen, wenn diese sich nicht in Arbeitslage befinden. In Parkposition sollen die Laserköpfe ausgeschaltet sein, allerdings sollen die übrigen Laserköpfe weiter ihre Arbeit verrichten können, wenn Sie sich in einem Anlageverbund befinden. Hierzu ist eine Parkbox mit einer Mehrzahl von Aufnahmen für Laserköpfe vorgesehen. In diese Aufnahmen können die Laserköpfe entweder eingehängt oder eingelegt werden. Die vorliegende Erfindung ist aber vor allem dadurch gekennzeichnet, dass jede Aufnahme eine Einrichtung zum Erkennen eines Laserkopfes aufweist. Jede Aufnahme ist quasi "nummeriert" und nur für einen bestimmten, ebenfalls nummerierten Laserkopf vorgesehen. Die Aufnahme erkennt, wenn in sie ein Laserkopf mit einer anderen "Nummer" eingelegt oder eingehängt wird und schaltet dann die Maschine ab oder zumindest die Energieversorgung der Laser.

Für das Abstimmen und Erkennen der Laserköpfe in den Aufnahmen sind natürlich eine Vielzahl von Möglichkeiten vorgesehen und auf dem Markt bekannt, wie beispielsweise Sensoren mit Strichcodes, RFID-Sensoren od. dgl. All diese Möglichkeiten sollen von der vorliegenden Erfindung umfasst sein.

Aufgrund der eben beschriebenen Fahrweise für eine Vorrichtung zum Bearbeiten von Werkstücken mit Laser, umfasst die vorliegende Erfindung auch das entsprechende Verfahren zur Steuerung eines Systems zum Bearbeiten von Werkstücken mit einer Mehrzahl von Laserköpfen, die sich in einem Anlageverbund befinden und die von einer Arbeitsposition in eine Parkposition bewegt werden können. Dieses Verfahren ist dadurch gekennzeichnet, dass ein einzelner Laserkopf unabhängig von den anderen Laserköpfen abgeschaltet werden kann. Insbesondere beinhaltet dieser Gedanke das erfinderische Merkmal, dass die Parkposition und der Laserkopf aufeinander abgestimmt gekennzeichnet werden. Die Parkposition erkennt, ob sich in ihr der richtige Laserkopf befindet.

Im Rahmen der Erfindung ist auch daran gedacht, dass die Parkbox einzelne Module mit den Aufnahmen aufweist, wobei je nach Anzahl der Laserköpfe mehrere Module miteinander gekoppelt und über eine Kontrolleinheit mit der Maschinensteuerung verbunden werden können.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
**Figur 1** eine Seitenansicht eines erfindungsgemässen Laserkopfs;
**Figur 2** eine vergrössert dargestellte Draufsicht auf eine Halterung für den Laserkopf nach Figur 1;
**Figur 3** eine Seitenansicht eines weiteren Ausführungsbeispiels eines erfindungsgemässen Laserkopfs;
**Figur 4** eine Seitenansicht einer erfindungsgemässen Parkbox zur Aufnahme von Laserköpfen;
**Figur 5** ein Blockschema eines erfindungsgemässen Systems zum Bearbeiten von Werkstücken mit einer Mehrzahl von Laserköpfen und angeschlossener Parkbox.

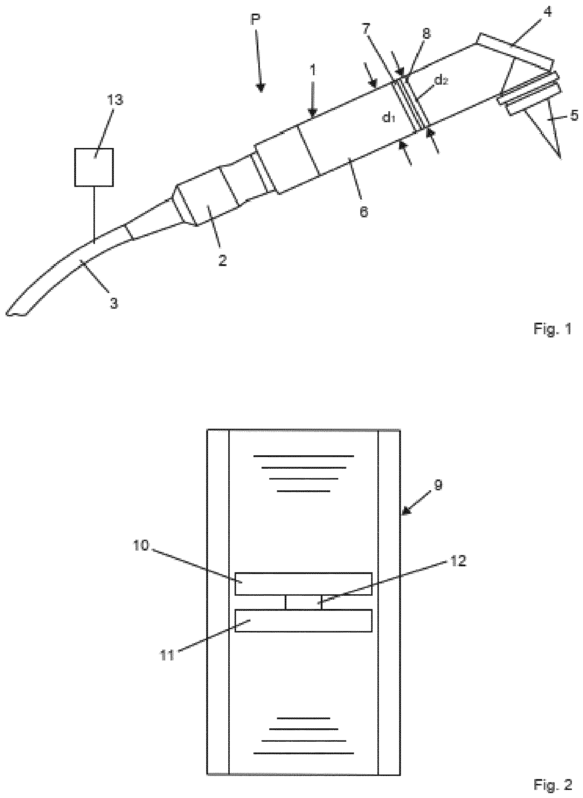

Gemäss Figur 1 weist ein erfindungsgemässer Laserkopf P einen Faserstecker 2 zum Anschluss eines Lichtleiters 3 an eine nicht näher gezeigte Lichtquelle für ein Laserlicht auf. An den Stecker 2 schliesst ein Gehäuse 1 an, in dessen vorderen Teil eine Umlenkeinrichtung 4 integriert ist, so dass ein hier nicht dargestellter Laserstrahl im rechten Winkel umgelenkt wird und aus dem Laserkopf 1 als kegelförmiger Laserstrahl 5 austritt, der punktförmig auf ein Werkstück ausgerichtet ist.

In dem Gehäuse 1 bzw. einem Gehäusemantel 6 sind zwei Ringe 7 und 8 integriert, die elektrisch leitfähig sind. Dabei weisen diese Ringe 7 und 8 einen Durchmesser d2 auf, der geringer als ein Durchmesser d1 des Gehäuses 1 ist. Gemäss Figur 2 kann ein Laserkopf P Aufnahme in einer schalenförmigen Halterung 9 finden. Der Laserkopf 1 wird in diese schalenförmige Halterung 9 eingelegt, wobei die beiden Ringe 7 und 8 in Kontakt mit zwei Ringsegmenten 10 und 11 gelangen. Diese Ringsegmente 10 und 11 sind Teil eines elektrischen Schaltkreises, von dem hier nur eine Verbindung 12 zwischen den beiden Ringsegmenten 10 und 11 angedeutet ist. Dieser elektrische Schaltkreis steht in Wirkverbindung mit einem nur blockschaltbildlich dargestellten Unterbrecher 13 für den Laserstrahl. In der Regel dürfte es sich bei dem Unterbrecher 13 um einen einfachen Ein-/Ausschalter handeln, mit dem der Laserstrahl ein- oder abgeschaltet wird.

Die Funktionsweise der vorliegenden Erfindung ist folgende:
In Gebrauchslage liegt der Laserkopf P in der Schale 9 und die Ringe 7 und 8 befinden sich in elektrischem Kontakt mit den Ringsegmenten 10 und 11. Über die Verbindung 12 ist der elektrische Schaltkreis geschlossen, was eine ungehinderte Tätigkeit des Laserkopfes P gewährleistet. Wird nun, aus welchen Gründen auch immer, der Laserkopf P aus dem Halter 9 genommen, so wird der elektrische Schaltkreis unterbrochen, da keine elektrische Verbindung mehr zwischen den Ringen 7 und 8 vorhanden ist. Dies bedeutet für den Unterbrecher 13, dass in diesem Fall auch die Weiterführung des Laserstrahls unterbrochen wird und damit kein Laserlicht mehr aus dem Laserkopf P austreten kann.

Bevorzugt soll zusätzlich zu den Ringen 7 und 8 auch das Gehäuse 1 elektrisch abgefragt werden. Dies sorgt dafür, dass ein Kurzschluss zwischen Gehäuse und den Ringen 7 und/oder 8 erkannt wird. Hier ist es allerdings vorteilhaft, wenn der Durchmesser der Ringe 7 und 8 geringer ist, als der äussere Durchmesser des Gehäuses 1.

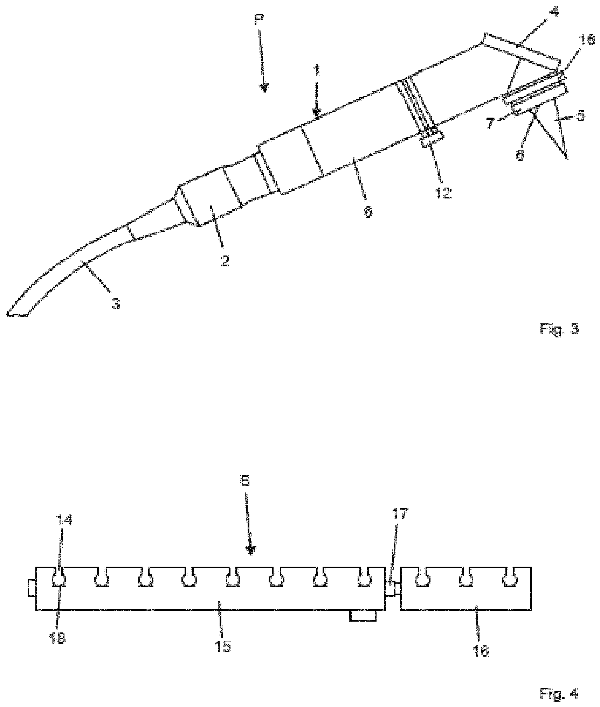

In einem verbesserten Ausführungsbeispiel der Erfindung gemäss Figur 3 ist daran gedacht, dass auch die Verbindung 12 überwacht wird. Beispielsweise könnte es möglich sein, dass versucht wird, die beiden Ringsegmente 10 und 11 und/oder die beiden Ringe 7 und 8 mit einem Draht od. dgl. zu überbrücken. Ferner könnte es auch denkbar sein, dass beispielsweise der Laserkopf P auf einer Stahlwolle od. dgl. abgelegt wird, was zu einer Überbrückung der Ring 7 und 8 führen könnte. In dem elektrischen Schaltkreis wird aber dann über den Widerstand erkannt, ob es sich tatsächlich um eine reguläre Überbrückung der Ringe 7 und 8 bzw. der Ringsegmente 10 und 11 handelt oder aber um eine nicht gewünschte Überbrückung.

Erfindungsgemäss soll ferner ein Ablegen des Laserkopfs P in einer erfindungsgemässen Parkbox B erfolgen, die in Figur 4 schematisch gezeigt ist. Diese Parkbox B weist eine Mehrzahl von Aufnahmen 14 auf, in die der Laserkopf P eingesetzt, eingehängt oder eingelegt werden kann. Im gezeigten Ausführungsbeispiel besteht die Parkbox B aus zwei Modulen 15 und 16, die über Stecker 17 elektrisch miteinander verbunden sind. Auf diese Weise kann eine Mehrzahl von Modulen aneinander gereiht werden.

Das Besondere im vorliegenden Fall ist, dass sich in jeder Aufnahme eine Einrichtung zum Erkennen eines bestimmten Laserkopfes P befindet. Hierzu ist ein Kontaktelement 18 angedeutet. Dieses Kontaktelement 18 ist auf einen vorbestimmten Laserkopf P ausgerichtet, so dass das Kontaktelement 18 erkennt, ob der für diese Aufnahme 14 bestimmte Laserkopf sich auch tatsächlich in dieser Aufnahme befindet.

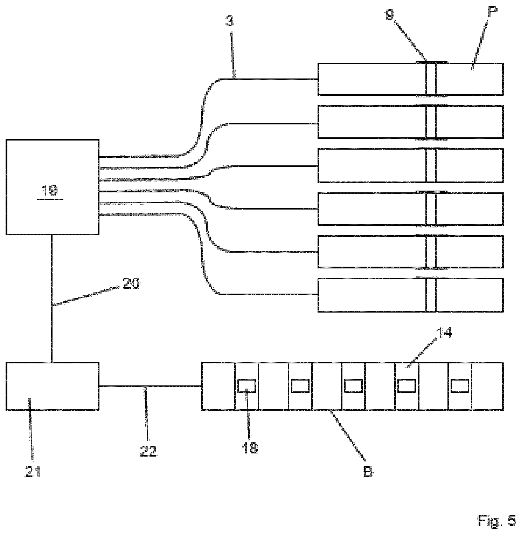

Ein gesamtes erfindungsgemässes System ist in Figur 5 angedeutet. Dort sind sechs Laserköpfe P über entsprechende Lichtleiter 3 mit einer Maschinensteuerung 19 verbunden. Diese Maschinensteuerung 19 besitzt wiederum eine Anbindung 20 an eine Kontrolleinheit 21, die eine Verbindung 22 zu einer Parkpox B mit den Aufnahmen 14 besitzt. Die Laserköpfe P liegen in den schalenförmigen Halterungen 9.

Die Aufnahmen 14 weisen die oben erwähnten Kontaktelemente 18 auf. Jedes Kontaktelement 18 erkennt nur den ihm zugeordneten Laserkopf P. Sollte ein anderer Laserkopf P eingelegt werden, erkennt das Kontaktelement diesen Laserkopf nicht und gibt eine Falschmeldung über die Kontrolleinheit 21 an die Maschinensteuerung 19 ab, die zu einem Abschalten der Maschine führt.

Das Gesamtsystem funktioniert folgendermassen:
Die Laserköpfe P befinden sich über der Maschinensteuerung 19, die Kontrolleinheit 21 und die entsprechenden Verbindungen in einem Anlageverbund mit der Parkbox B. Die Laserköpfe P werden erst dann mit Energie versorgt, wenn sich alle Laserköpfe P in ihren Halterungen 9 befinden, wobei auch hier bevorzugt jede Halterung 9 den ihr zugeordneten richtigen Laserkopf erkennt.

Wird nun ein Laserkopf P entfernt, wird auch die oben beschriebene Verbindung zwischen den Ringen 7/8 und Ringsegmenten 10/11 gelöst, so wird der Anlagenverbund unterbrochen und die Anlage schaltet ab. Wird nun dieser Laserkopf P in die ihm zugeordnete Aufnahme 14 der Parkbox B eingesetzt, so erkennt die Maschinensteuerung 19 über die Kontrolleinheit 21, dass sich dieser Laserkopf P in seiner Parkposition befindet und schaltet den Anlagenverbund wieder ein, damit die übrigen Laser ohne weitere Störung arbeiten können. Dazu gehört aber, dass der richtige Laserkopf der richtigen Aufnahme 14 zugeordnet wird. Geschieht dies nicht, schaltet der Anlagenverbund auch nicht wieder ein.

Das Kontaktelement in der Parkbox B braucht kein Sicherheitsschalter zu sein, da die Personen- und Anlagensicherheit hiervon nicht betroffen ist. Bei nicht eingestecktem oder falsch eingestecktem Laserkopf kann lediglich die Werkzeugmaschine nicht gestartet bzw. betrieben werden.

Um keinen unnötigen Arbeitsunterbruch zu erzeugen, kann auch denkbar sein, dass zwischen dem Entfernen des Laserkopfs P aus seiner Schale 9 und dem Einstecken dieses Laserkopfs in die Aufnahme 18 ein Zeitintervall eingebaut wird, welches gewährleistet, dass der Anlagenverbund erst dann abgeschaltet wird, wenn der entfernte Laserkopf nicht nach einer gewissen Zeit von dem Kontaktelement 18 in der Aufnahme 14 erkannt wird.

**Bezugszeichenliste**

| | | | | | |
|---|---|---|---|---|---|
| 1 | Gehäuse | 34 | | | |
| 2 | Stecker | 35 | | | |
| 3 | Lichtleiter | 36 | | | |
| 4 | Umlenkeinrichtung | 37 | | | |
| 5 | Laserstrahl | 38 | | B | Parkbox |
| 6 | Gehäusemantel | 39 | | | |
| 7 | Ring | 40 | | | |
| 8 | Ring | 41 | | | |
| 9 | Halterung | 42 | | d1 | Durchmesser von 7/8 |
| 10 | Ringsegment | 43 | | | |
| 11 | Ringsegment | 44 | | d2 | Durchmesser von 1 |
| 12 | Verbindung | 45 | | | |
| 13 | Unterbrecher | 46 | | | |
| 14 | Aufnahme | 47 | | | |
| 15 | Modul | 48 | | | |
| 16 | Modul | 49 | | | |
| 17 | Stecker | 50 | | | |
| 18 | Kontaktelement | 51 | | | |
| 19 | Maschinensteuerung | 52 | | | |
| 20 | Anbindung | 53 | | | |
| 21 | Kontrolleinheit | 54 | | P | Laserkopf |
| 22 | Verbindung | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. System zum Bearbeiten von Werkstücken mit einem Laserkopf (P) zum Ausbringen eines Laserstrahls (5), der in einem Gehäuse (1) in einem Lichtleiter (3) geführt ist, wobei der Lichtleiter (3) mit einer Lichtquelle verbunden ist und diese Verbindung durch einen Unterbrecher (13) abschaltbar ist,
**dadurch gekennzeichnet,**
**dass** dem Unterbrecher (13) ein elektrischer Schaltkreis zugeordnet ist, der bei einer Lageänderung des Gehäuses (1) den Unterbrecher (13) betätigt.

2. System nach Anspruch 1, **dadurch gekennzeichnet, dass** an dem Gehäuse (1) elektrische Kontakte angeordnet sind, welche mit elektrischen Kontakten in einer Halterung (9) für das Gehäuse (1) zusammenwirken.

3. System nach Anspruch 1 oder 2, **dadurch gekennzeichnet, dass** sich an oder in einem Gehäusemantel (6) beabstandete Ringe (7,8) befinden, die in dem elektrischen Schaltkreis angeordnet sind.

4. System nach Anspruch 3, **dadurch gekennzeichnet, dass** sich in der Halterung (9) Ringsegmente (10,11) zum Zusammenwirken mit den Ringen (7,8) an oder in dem Gehäusemantel (6) befinden.

5. System nach Anspruch 4, **dadurch gekennzeichnet, dass** sich zwischen den Ringsegmenten (10,11) eine Rinne befindet, die zur Aufnahme eines Ringkragens zwischen den Ringen (7,8) dient.

6. System nach wenigstens einem der Ansprüche 3 bis 5, **dadurch gekennzeichnet, dass** ein Durchmesser (d1) der Ringe (7,8) geringer ist als ein Durchmesser (d2) des Gehäusemantels (6).

7. System nach wenigstens einem der vorhergehenden Ansprüche, **dadurch gekennzeichnet, dass** dem elektrischen Schaltkreis ein Widerstand einer vorbestimmten Größe zugeordnet ist.

8. System nach Anspruch 7, **dadurch gekennzeichnet, dass** der Widerstand zwischen den beiden Ringen (6,7) und/oder den beiden Ringsegmenten (10,11) angeordnet ist.

9. System nach wenigstens einem der vorhergehenden Ansprüche, **dadurch gekennzeichnet, dass** dem Laserkopf (P) eine Parkbox (B) mit Aufnahmen (14) zur Aufnahme einer Mehrzahl von Laserköpfen (P) zugeordnet ist.

10. System nach Anspruch 9, **dadurch gekennzeichnet, dass** die Aufnahmen (14) Einrichtungen (18) zum Kontaktieren des Schaltkreises des Laserkopfs (P) aufweisen.

11. System nach Anspruch 10, **dadurch gekennzeichnet, dass** die Aufnahme (14) eine Einrichtung zum Erkennen des Laserkopfes aufweist.

12. System nach wenigstens einem der Ansprüche 9 bis 11, **dadurch gekennzeichnet, dass** die Parkbox (B) modular aufgebaut ist.

13. System nach wenigstens einem der vorhergehenden Ansprüche, **dadurch gekennzeichnet, dass** eine Mehrzahl von Laserköpfen (P) mit einer Maschinensteuerung (19) in Verbindung stehen und diese mit einer Kontrolleinheit (21) für die Parkbox (B) in Verbindung steht.

14. Verfahren zur Steuerung eines Systems zum Bearbeiten von Werkstücken mit einer Mehrzahl von Laserköpfen (P), die sich in einem Anlagenverbund befinden und die von einer Arbeitsposition in eine Parkposition bewegt werden können, **dadurch gekennzeichnet, dass** ein einzelner Laserkopf (P) unabhängig von den anderen Laserköpfen (P) abgeschaltet werden kann.

15. Verfahren nach Anspruch 14, **dadurch gekennzeichnet, dass** die Parkposition und der Laserkopf (P) aufeinander abgestimmt gekennzeichnet werden und in der Parkposition erkannt wird, ob sich in ihr der richtige Laserkopf (P) befindet.
